# EUROPEAN PATENT SPECIFICATION

(11) **EP 0 977 475 B1**
(45) Date of publication and mention of the grant of the patent: **04.09.2002**
(21) Application number: 97911445.1
(22) Date of filing: 05.11.1997
(51) Int. Cl.: A01D 75/20, A01G 3/06

(54) **AN ACCIDENT PREVENTION DEVICE FOR EDGE TRIMMERS**
UNFALLVERHÜTUNGSVORRICHTUNG FÜR KANTENTRIMMER
DISPOSITIF DE PREVENTION DES ACCIDENTS CAUSES PAR DES DEBROUSSAILLEUSES

(30) Priority: 06.11.1996 IT AN960035
(43) Date of publication of application: 09.02.2000
(73) Proprietor: S.L.A.M.- S.R.L., 63040 Montegallo (IT)
(72) Inventor: SEBASTIANI, Luciano, I-63040 Montegallo (IT)
(74) Representative: Baldi, Claudio
(86) International application number: IT9700274
(87) International publication number: WO98019516

(56) References cited:
- DE-U- 8 703 547
- US-A- 4 823 464
- US-A- 5 493 784

## Description

This patent application concerns an accident prevention device for edge trimmers.

Current edge trimmers available on the market are all constructed on the same principle whereby the cutting tool is fixed on a chuck housed in a head positioned at the base of a long tubular rod in which the shaft operating the chuck, is fitted and rotates, driven by a small combustion engine mounted at the other end of the rod.

The worker holds the edge trimmer from a handle fitted halfway along the rod which, when used is held in a slanted position so that the chuck-holder head - positioned vertically or slightly sub-vertically - brushes against the ground at a certain distance from the feet of the worker.

Generally, said edge trimmers are supplied with two different cutting tools which can be mounted on the edge trimmer chuck; the first is a small disk from which a fishing line projects which spins to cut grass and tender shrubs; the second consists of a knife which is fixed to the centre of the chuck providing a pair of diametrically opposed cutting blades.

Both the fishing line disk and the knife are generally not protected by a cover so that there is a very high risk of accidental cuts to the worker when using these trimmers.

The parts of the body most exposed to the accidents are obviously the legs which may get in the way of the cutting tool or be hit by stones or other objects hurted by the cutting tool.

Over and above this, if the trimmer knife strikes stones or other hard objects, the blade may break and, due to the absence of a protecting cover, the pieces spinning at a very high speed will be flung to become dangerous missiles which can very seriously hurt the persons or property they strike.

Due to the above, protection screens have recently been designed consisting of a sheet plate bell-shaped cover installed on the chuck-holder head and housing the cutting tool whose axis of rotation is coincident with the axis of symmetry of the bell-shaped cover.

US patent No. 4823464 describes a trimmer provided with a cutting element which rotates into a bell-shaped protection cover featuring a big central hole through which the chuck of the motor can be fitted into said bell-shaped cover.

The motor housing features a flanged portion provided with periphery holes for the bolts to be fitted and used to secure said bell-shaped cover under the flanged portion.

It is obvious that said bell-shaped cover features, all around the big central hole, smaller holes for the bolts to be fitted.

However the chuck of the motor can be fitted only through said big central hole.

If the tool breaks accidentally, the spinning fragments are intercepted and stopped in the bell-shaped protection cover which also restrains blunt bodies thrown by the cutting tool. The use of these bell-shaped protection covers also allows the worker to give a more even cut to the lawn; it is evident that by sliding the bell-shaped protection cover on the ground the lawn will automatically be cut more evenly at a height from the ground equal to the difference in height between the bottom edge of the bell-shaped cover and the rotation plane of the cutting tool, without any particular effort or attention on the part of the worker.

Although the use of said protection covers undoubtedly ensures that the same may be used in total safety, it does however limit the field of application and efficiency of the trimmer.

First and foremost it is evident that if the cutting tool is housed in a bell it is impossible to reach the trunk of small shrubs at the base which would interfere with the outer edge of the cover. It is also impossible to use the trimmer to cut the smaller branches of trees which can be cut only by an unprotected blade.

Even when cutting grass however the use of said bell-shaped covers may become a problem at times, for instance when cutting grass which is very high, such as grass for fodder.

In these cases, the outer edge of the bell-shaped cover will inevitably bend the grass making it difficult for the cutter to efficiently cut the blades of the grass.

The purpose of this invention is to design a new protection cover model for trimmers which is more versatile and efficient to use with respect to those currently existing on the market.

A further scope of this invention is to design a cutting tool which can prevent accidents and is safe to use.

The device according to the invention is provided with a bell-shaped cover realised in sheet plate or other plastic materials characterised by two holes, a centre hole and an eccentric hole, at which the chuck-holder head of the trimmer may be fitted when required.

When the chuck-holder head is fitted to the centre hole, the cutting tool is perfectly centred in the bell-shaped cover therefore providing a high level of safety to the operator should the tool break or stones and other objects be flung by the tool.

If the chuck-holder head is fitted into the eccentric hole of the bell-shaped cover, one of the ends of the cutting tool projects beyond the outer edge of the bell-shaped cover, whose axis intersects that of the chuck-holder head.

In this operating position, the cover in question acts as a protection screen for the operator for only a span of the semi-circumference; this reduced degree of protection however increases the versatility and efficiency of the edge trimmer which can also be used to cut shrubs and high grass, to prune trees and trim hedges, thanks to the fact that the cutting tool projects beyond the outer edge of the bell-shaped cover.

The device according to the invention also includes a cutting tool consisting of a cutting blade suitably profiled and screwed to a support disk by means of interposing inserts which give the blade a warped profile which, as the knife rotates, produces an active or passive lift, according to the position of the inserts selected by the operator.

In the case of active-lift, the operator no longer has to lift the trimmer off the ground, in that the same is virtually self-supporting.

The fact that the knife is fixed on a support disk, which is in turn fixed to the chuck by means of a centre bolt, reduces the risk of accidents if the knife breaks accidentally along a transverse line passing through the centre hole of the knife provided for the intersection of the fixing bolt to the chuck.

In this unfortunate event, the two parts of the knife will in fact remain attached to the above support disk without the possibility of being dangerously flung around, as on the hand occurs, with the use of standard knives which are fixed directly onto the chuck without the interposition of the support disk.

Regarding the profile of the knife blades, it should be noted that the profile of the same curves backwards with respect to the rotation direction of the knife; this profile of the blades allows the knife to perform a gentle and progressive scissors-like cut, rather than a shearing cut as in the case of the straight bladed knives used to date.

In the device according to the invention the slicing rather than shearing effect of the knife indirectly provides major accident prevention safety in that the curved cutting blade, in the case of impact, sustains a less violent strain.

This reduces the probabilities that the knife will break and all the consequent risks this entails.

The centrifugation of the bodies flung by the rotating knife is also indirectly less violent and thus less dangerous.

For major clarity the description of the accident prevention device according to the invention continues with reference to the enclosed drawings which are intended for purposes of illustration and not in a limiting sense, whereby:
- fig. 1 is an axonometric and exploded view of the different components of the accident prevention device according to the invention;
- fig.2 shows the device according to the invention with the chuck-holder head of the trimmer fitted into the centre hole of the bell-shaped protection cover;
- fig. 3 shows the device according to the invention with the chuck-holder head of the trimmer fitted into the eccentric hole of the bell-shaped protection cover.

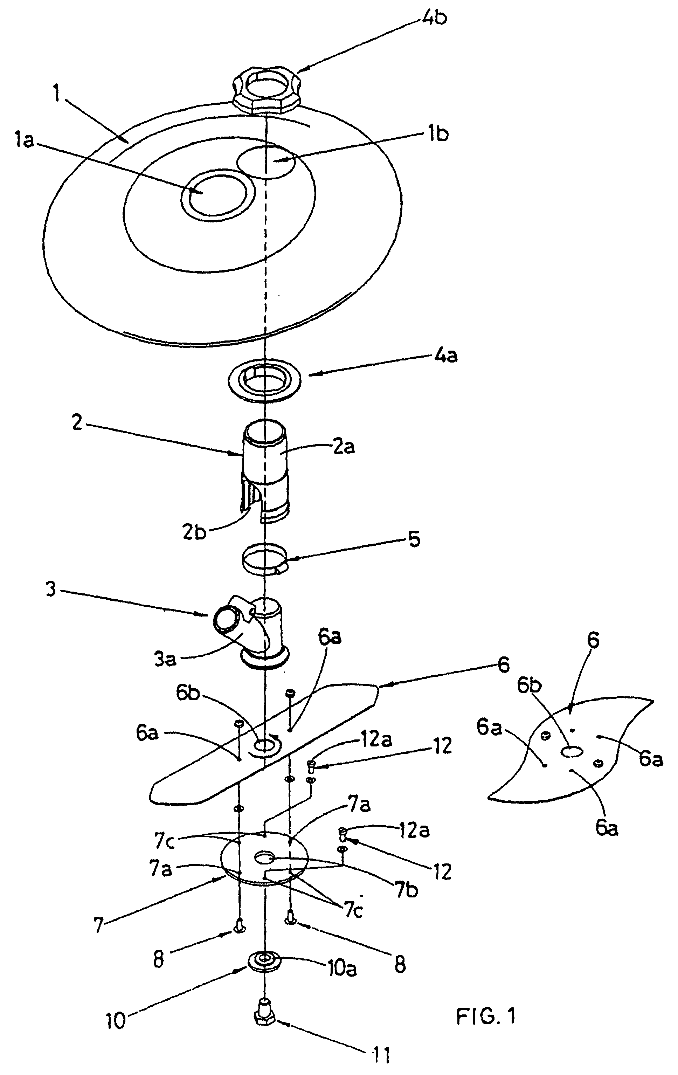

With particular reference to figure 1, the accident prevention device in question consists of a bell-shaped cover (1) having two identical holes, one at the centre (1a) and the other eccentric (1b) into which the threaded pin (2a) fitted at the top of a casing (2) designed to house the chuck-holder head (3) of the trimmer, may be fitted as required.

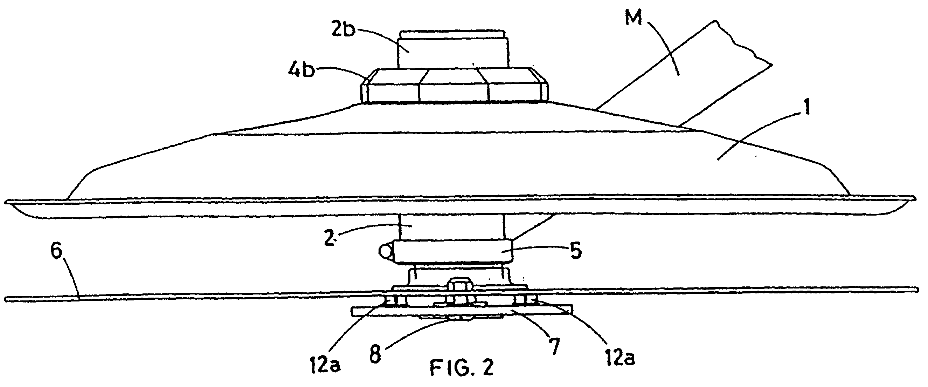

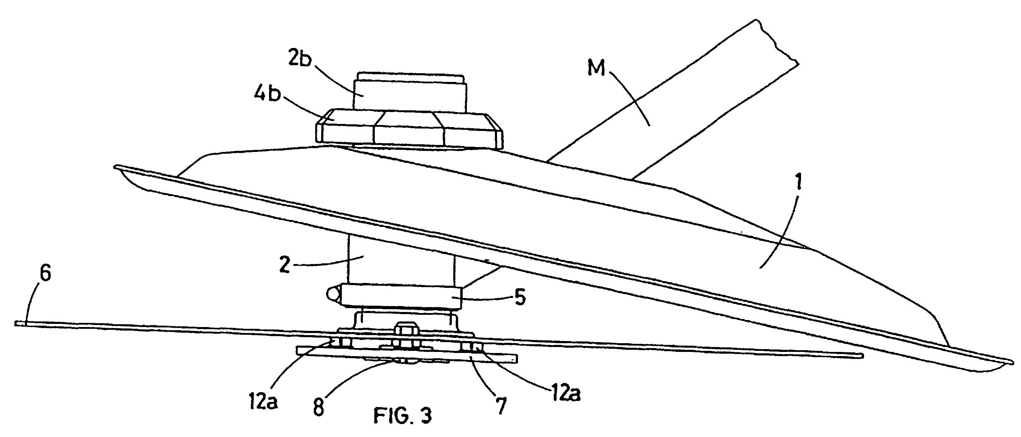

Said casing (2) is for this purpose provided with a notch (2b) designed to house the nosepiece (3a) projecting from a side of the chuck-holder head (3) into which the rod handle (M) of the trimmer is fitted. In this regard it should be noted that the hole of the bell-shaped cover (1) not occupied by the threaded pin (2a) of the casing (2) is crossed by said handle (M) as shown in figs. 2 and 3.

The pin (2a) is stopped in one of the two holes (1a or 1b) by a nut (4a) and a counter-nut (4b), both screwed to said pin (2a), one fitted in the bell-shaped cover (1) and the other fitted outside the bell-shaped cover (1) which is therefore fixed between the nut (4a) and counter-nut (4b).

The chuck-holder head (3) is stopped in the casing (2) by a clamp (5) wound tightly around the edge of the casing (2) base.

The device in question also includes a knife (6) fixed above a support disk (7) by means of bolts (8) fitted into holes (6a) on knife (6) and through corresponding holes (7a) on disk (7).

The connection of the disk (7) to the chuck-holder head (3) is by means of a washer (10) positioned under the disk (7) and provided on its upper face with a collar (10a) housing precisely in the centre hole (7b) of disk (7) and the centre hole (6b) of knife (6).

A bolt (11) fitting into wash (10) and screwed to the chuck-holder head (3) fixes the disk (7) against the chuck-holder head.

Disk (7) is provided with perimeter holes (7c) into which bolts (12) are fitted and whose head (12a) remains between disk (7) and knife (6) so as to warp knife (6) so that the same may, during rotation, produce an active or passive lift, according to how the operator positions said bolts (12).

## Claims

1. "An edge trimmer of the type comprising:
- a cutting blade (6);
- a rod handle (M) terminating with a chuck-holder head (3);
- an accident protection device consisting of a bell-shaped protection cover (1) designed to house said blade (6) and featuring two identical holes, one at the centre (1a) and the other eccentric (1b);
- a casing (2) designed to house the chuck-holder head (3) and terminating at the top with a threaded pin (2a) designed to be fitted as required into one of the aforementioned holes (1a and 1b), and on which a nut (4a) and a counter-nut (4b) are screwed, so as to ensure the fixing of the cover (1) on the casing (2), while the rod handle (M) is fitted into the other hole;
- a clamp (5) for stopping said chuck-holder head (3) in the casing (2)".

2. An edge trimmer according to the previous claim, **characterised in that** said blade (6) is fixed on a support disk (7) by means of bolts (8) fitted into holes (6a) on the blade (6) and through the corresponding holes (7a) on the disk (7); it being provided that the disk (7) is connected to the chuck-holder head (3) by means of a bolt (11) which is screwed to the chuck after being fitted into a washer (10), placed under the disk (7) and provided on its upper surface with a collar (10a) which is precisely housed in the centre hole (7b) of the disk (7) and the centre hole (6b) of the blade (6).

3. An edge trimmer according to claim 2 **characterised in that** the disk (7) is provided, in addition to holes (6a), with perimeter holes (7c) into which bolts (12) are fitted and whose head is positioned between disk (7) and blade (6) so as to warp the blade (6).

4. An edge trimmer according to the previous claims **characterised in that** the blade (6) features blades whose profiles are curved backwards with respect to the rotation direction of the knife.

## Patentansprüche

1. Abbuschgerät, bestehend aus:
- einem Messer (6)
- einem Stiel (M), an dessen Ende sich ein Spindelträgerkopf (3) befindet;
- einer Unfallverhütungsvorrichtung, bestehend aus:
- einer glockenförmigen Schutzabdeckung (1), die dazu bestimmt ist, ein Messer (6) aufzunehmen und zwei identische Löcher (1a und 1b) aufweist, wovon das eine mittig und das andere exzentrisch angeordnet ist;
- einer Haube (2), die dazu bestimmt ist, den Spindelträgerkopf (3) aufzunehmen und an der Spitze in einem Gewindestift (2a) endet, der alternativ in eines der beiden zuvor genannten Löcher (1a und 1b) eingesteckt wird und auf welchen eine Mutter (4a) sowie eine Gegenmutter (4b) aufgeschraubt wird, welche zur Befestigung des Deckels (1) auf der Haube (2) dienen, während der Stiel (M) in das andere Loch eingesteckt wird;
- einer Schelle (5), die dazu dient, den Spindelträgerkopf (3) im Innern der Haube (2) zu arretieren.

2. Abbuschgerät gemäß dem vorstehenden Anspruch, **dadurch gekennzeichnet, dass** das besagte Messer (6) auf einer Trägerscheibe (7) mittels Bolzen (8) befestigt ist, welche durch die hierfür vorgesehenen Löcher (6a) des Messers (6) und durch die entsprechenden Löcher (7a) der Scheibe (7) gesteckt werden, wobei vorgesehen ist, dass die Verbindung der Scheibe (7) zum Spindelträgerkopf (3) mittels eines Bolzens (11) erfolgt, welcher auf die Spindel aufgeschraubt wird, nachdem er in eine Unterlegscheibe (10) eingeführt wurde, welche sich (10) unterhalb der Scheibe (7) befindet und auf der Oberseite mit einem Bund (10a) versehen ist, welcher exakt in das mittlere Loch (7b) der Scheibe (7) und das mittlere Loch (6b) des Messers (6) passt.

3. Abbuschgerät gemäß Anspruch 2, **dadurch gekennzeichnet, dass** sich auf der Scheibe (7) außer den besagten Löchern (6a) weitere, peripher angeordnete Löcher (7c) befinden, in welche kleine Bolzen (12) eingesteckt werden, deren Kopf (12a) sich zwischen der Scheibe (7) und dem Messer (6) befindet, um eine Verwindung des Messers (6) zu bewirken.

4. Abbuschgerät gemäß den vorstehenden Ansprüchen, **dadurch gekennzeichnet, dass** das Messer (6) Schneiden mit gekrümmtem Profil besitzt, welches entgegengesetzt zur Rotationsrichtung des Messers ausgerichtet ist.

## Revendications

1. Débroussailleuse du type comprenant :
- un couteau (6) ;
- un manche à bâton (M) se terminant par une tête porte-mandrin (3) ;
- un dispositif contre les accidents constitué d'un capot de protection en forme de cloche (1) destiné à loger un couteau (6) et présentant deux trous identiques (1a et 1b), l'un central et l'autre excentrique ;
- une coiffe (2) destinée à loger la tête porte-mandrin (3) et se terminant à son sommet par un pivot fileté (2a) apte à être enfilé sélectivement dans l'un des susdits trous (1a et 1b) et sur lequel sont vissés un écrou (4a) et un contre-écrou (4b) qui assurent la fixation du capot (1) à la coiffe (2), tandis que le manche à bâton (M) est enfilé dans l'autre trou ;
- une bague (5) apte à assurer l'arrêt de ladite tête porte-mandrin (3) à l'intérieur de la coiffe (2).

2. Débroussailleuse selon la revendication précédente, **caractérisée en ce que** ledit couteau (6) est fixé au-dessus d'un disque de support (7) à l'aide de boulons (8), enfilés à travers des trous (6a) prévus à cet effet sur le couteau (6) et à travers des trous correspondants (7a) prévus sur le disque (7); étant prévu que l'attache du disque (7) à la tête porte-mandrin (3) s'effectue à l'aide d'un boulon (11) que l'on visse au mandrin après l'avoir enfilé dans une rondelle (10), positionnée sous le disque (7), rondelle dotée sur la partie supérieure d'un collier (10a) qui se loge exactement dans le trou central (7b) du disque (7) et dans le trou central (6b) du couteau (6).

3. Débroussailleuse selon la revendication 2, **caractérisée en ce que** sur le disque (7) sont prévus, outre les susdits trous (6a), d'autres trous périphériques (7c) dans lesquels sont enfilés des petits boulons (12) dont la tête (12a) reste interposée entre le disque (7) et le couteau (6), de manière à déterminer le cambrage du couteau (6).

4. Débroussailleuse selon les revendications précédentes, **caractérisée en ce que** le couteau (6) présente les tranchants ayant un profil curviligne tourné vers l'arrière par rapport à la direction de rotation du couteau même.
